# EUROPEAN PATENT APPLICATION

(11) **EP 4 703 942 A1**
(43) Date of publication of application: **04.03.2026**
(21) Application number: 24196358.6
(22) Date of filing: 26.08.2024
(51) Int. Cl.: G06F 21/62, H04L 9/32, H04L 9/00, H04L 9/40

(54) **WORKFLOW-AWARE ACCESS CONTROL FOR SOURCE CODE MANAGEMENT**

(71) Applicant: Siemens Aktiengesellschaft, 80333 München (DE)
(72) Inventor: Bertolino, Marco, 80339 München (DE); Pizzamiglio, Giacomo, 80339 München (DE); Stahnke, Susanne, 84547 Emmerting (DE)
(74) Representative: Siemens Patent Attorneys

(57) **Abstract**

Embodiments of the present disclosure provide a system and method for workflow-aware access control, WFAC, in a source code management, SCM, repository. The method may comprise: receiving, by a central manager, a request from a Resource Contributor, RC, to access the SCM repository owned by a Resource Owner, RO; initiating, by either the RO or the RC, a creation of an access policy for accessing the SCM repository; customizing, by the initiating party, a policy template using metadata to define specific contract details; deploying the customized access policy as a smart contract on a semi-private blockchain; obtaining agreement from the RO and the RC by collecting digital signatures on the smart contract; evaluating, by the central manager, one or more conditions specified in the agreed access policy; updating, by a controller, one or more SCM settings based on the evaluated conditions to grant the RC access to the SCM repository; and allowing, by the central manager, the RC to access the SCM repository in accordance with the updated SCM settings.

## Description

### TECHNICAL FIELD

The non-limiting and exemplary embodiments of the present disclosure generally relate to effective management and enforcement of dynamic, workflow-aware access control (WFAC) policies in a multi-party Source Code Management (SCM) system.

### BACKGROUND

In the context of development projects, collaboration is often essential. Many times, this involves partnering with third-party service providers or external development partners. These partners need access to a main codebase, which houses sensitive business information. However, granting this access needs to be done without disrupting the established workflow. The problem is ensuring that external partners can work on the code while collaborating, but without stumbling upon or altering critical parts that they are not allowed to interact with. Such a problem becomes even more pronounced when business secrets could be at risk if not managed appropriately.

Conventionally, to manage project codebases, the industry primarily relies on Source Code Management (SCM) systems. These systems are essentially platforms that encompass one or more "git" repositories, offering added features for code management. A Git repository, the underpinning technology for many SCMs, was developed during the early stages of the IT development. However, it is not particularly well-equipped to handle intricate collaborative workflows. For instance, Git does not inherently support access controls. Recognising this gap, many SCM platforms introduced Role-Based Access Control (RBAC) mechanisms layered on top of git repositories. This allowed for some regulation on who could access what.

The default solutions in industry standard SCM (e.g., GitHub, Gitlab, Bitbucket) rely on Role Based Access Control (RBAC) to solve the above-mentioned issue. RBAC is a method of regulating access to computer or network resources based on the roles that users have within an organization. Instead of giving specific users access permissions, permissions are associated with roles, and users are assigned to appropriate roles. This way, a user's access to a resource is determined by their role, streamlining the management of permissions and ensuring that only authorized users can perform certain operations or access specific information. It is particularly useful for large organizations where individuals frequently change positions or responsibilities. Thus. in the context of SCM, RBAC is used to define what actions a user, or group of users, can perform on a given repository or group of repositories. When a user joins a project, they are assigned a role, and that role determines what they can and cannot do within the project. For instance, in GitLab, there are predefined roles like Guest, Reporter, Developer, Maintainer, and Owner. Each role has a specific set of permissions that determine what they can and cannot do. For example,
- A Guest might only be able to view the repository and its issues.
- A Reporter can view and create issues but might not be able to push code.
- A Developer can push code, create merge requests, and address issues.
- A Maintainer has even broader permissions, including the ability to manage the repository's settings and grant access to other users.
- An Owner can do everything a Maintainer can, but also has the authority to delete the project or transfer it to another user.
-

While RBAC provides a structured way to manage access permissions, it has limitations when dealing with multi-party development projects where an adaptive, dynamic repository access mechanism which is aware of business workflows is essential.

The static and predefined nature of RBAC might not be agile or adaptive enough to cater to the intricate and dynamic demands of multi-party development projects, especially when business workflows and secrets are paramount. In particular, RBAC is primarily static. Once roles are defined and permissions are assigned, they do not change dynamically based on workflow stages or real-time conditions. In a multi-party scenario, the progression of a workflow might necessitate changing access levels, something RBAC is not inherently designed for. RBAC does not account for the contextual nature of multi-party projects. It does not adjust access permissions based on project milestones, external events, or varying collaboration requirements. Roles in RBAC are often predefined and generalized. In complex, multi-party projects, a more granular and adaptive access mechanism may be required to cater to evolving needs and safeguard business secrets. Since RBAC operates on predefined roles, it does not have the adaptive mechanisms to restrict or grant access based on the sensitivity of business secrets. Furthermore, in collaborative environments, some secrets might be sharable with certain parties at specific stages but not with others. When roles proliferate in RBAC to cater to complex workflows, the system can become cumbersome. Adding, removing, or modifying roles to fit the ever-changing nature of collaborative multi-party projects can become an administrative challenge. Finally, in scenarios where rapid changes to access control are needed due to shifts in business strategy, partnerships, or other dynamics, RBAC might be too slow or rigid to respond, potentially leading to business risks.

In essence, as the industry evolves and collaborative workflows become more complex, there is a pressing need for a more advanced, adaptive, and secure mechanism to manage access to development project codebases. Therefore, there is a need for a dynamic access control mechanism able to adapt to changing project needs or team structures. Moreover, such mechanism should understand and adjust based on the ongoing business workflows to enable seamless collaboration, while ensuring security and protecting business secrets.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Embodiments of the present disclosure are generally directed to solutions that enable efficient workflow-aware access control (WFAC) policies in a multi-party Source Code Management (SCM) system.

The Workflow-Aware Access Control (WFAC) system differs fundamentally from conventional solutions such as Role-Based Access Control (RBAC) in several distinct areas, each offering its unique set of advantages. In terms of adaptability, while RBAC operates on fixed, predefined roles, WFAC dynamically updates access policies in real-time, mirroring evolving workflows. Such dynamism ensures that access permissions always align with the current phase or context of a project, leading to enhanced responsiveness to workflow changes. Such adaptation minimizes the risk of unauthorized access and ensures permissions adjust appropriately to project demands. Another distinction is the granularity of the WFAC system. Instead of the broad and generalized roles found in RBAC, WFAC leverages metadata and policy templates to provide a nuanced approach to permissions. This allows for tailored access controls, better suited to address the intricate demands of multifaceted projects. This customized approach promotes effective collaboration without compromising on security.

Technologically, the WFAC system leverages smart contracts on a semi-private blockchain. This distinct feature introduces an added layer of transparency, security, and validation that traditional RBAC systems lack. Such an implementation fosters immutable, transparent, and tamper-proof access agreements, ensuring heightened trust among collaborators and stakeholders. Additionally, WFAC's design stands out in its independence and ease of integration. It seamlessly works alongside existing SCMs but may operate independently in a cloud-based environment. This unique structure ensures that the system can be deployed without causing major changes to existing infrastructures, offering organizations a simplified integration process that minimizes disruptions. Lastly, the WFAC system employs a unique on-chain/off-chain model. This hybrid approach harnesses the reliability and robustness of blockchain execution with the efficiency and scalability of off-chain management, ensuring optimal system performance without sacrificing speed or functionality.

One or more embodiments include a system and a computer-implemented method for workflow-aware access control, WFAC, in a source code management, SCM, repository. The method may comprise receiving, by a central manager, a request from a Resource Contributor, RC, to access the SCM repository owned by a Resource Owner, RO; initiating, by either the RO or the RC, a creation of an access policy for accessing the SCM repository; customizing, by the initiating party, a policy template using metadata to define specific contract details; deploying the customized access policy as a smart contract on a semi-private blockchain; obtaining agreement from the RO and the RC by collecting digital signatures on the smart contract; evaluating, by the central manager, one or more conditions specified in the agreed access policy; updating, by a controller, one or more SCM settings based on the evaluated conditions to grant the RC access to the SCM repository; and allowing, by the central manager, the RC to access the SCM repository in accordance with the updated SCM settings.

In some embodiments, the method may comprise periodically or upon commits to the SCM repository, reevaluating, by the central manager, the one or more conditions specified in the access policy; determining if one or more termination conditions are met or if any policy violations have occurred; and if one or more termination conditions are met or if a policy violation is detected, bringing the system to a final state, wherein the final state may involve revoking the RC's access to the SCM repository.

In some embodiments, the method may further comprise proposing other new access policies by either the RO or the RC during the workflow to dynamically update the access to the SCM repository; customizing and deploying the other new access policies as smart contracts on the semi-private blockchain; and reevaluating and updating the SCM settings based on the other new access policies.

In some embodiments, deploying the customized access policy as a smart contract on a semi-private blockchain may comprise: selecting, by the initiating party, a policy template from a list of available templates; and customizing the selected policy template using metadata to define conditions, obligations, involved parties and resources.

In some embodiments, periodically reevaluating the one or more conditions may further comprise: monitoring other events in the SCM repository; and reevaluating the one or more conditions specified in the access policy based on the monitored events.

In some embodiments, the step of handling one or more termination conditions or violations may further comprise: logging the one or more termination conditions or violation events in a history logger; notifying all involved parties of the one or more termination conditions or violation events.

In some embodiments, the central manager may operate in a cloud-based environment separate from the SCM repository and may integrate with the SCM repository through an SCM Application Programming Interface (API).

Other embodiments include a system for workflow-aware access control, WFAC, in a source code management, SCM repository. The system may comprise: one or more processors; and a memory, the memory storing computer-readable instructions that, when executed by one or more of the processors, cause the one or more of the processors to implement: a central manager configured to process actions from a WFAC client; a policy engine configured to manage blockchain-associated components and offer agreement-related utilities; a history logger configured to log every operation carried out on the SCM repository; a policy storage component configured to maintain off-chain records including contract templates and metadata; one or more interfaces comprising an SCM API; a WFAC client configured to provide a user interface for administering the system; wherein the instructions, when executed by the one or more of the processors, further cause the one or more of the processors to: receive, by the central manager, a request from a Resource Contributor, RC, to access the SCM repository owned by a Resource Owner, RO; initiate, by either the RO or the RC, a creation of an access policy for accessing the SCM repository; customize, by the initiating party, a policy template using metadata to define specific contract details; deploy the customized access policy as a smart contract on a semi-private blockchain; obtain agreement from the RO and the RC by collecting digital signatures on the smart contract; evaluate, by the central manager, one or more conditions specified in the agreed access policy; update, by the controller, one or more SCM settings based on the evaluated conditions to grant the RC access to the SCM repository; and allow, by the central manager, the RC to access the SCM repository in accordance with the updated SCM settings.

In some embodiments, the system may operate in a cloud-based environment separate from the SCM repository and may integrate with the SCM repository through the SCM API.

In some embodiments, the policy storage component may further comprise: a storage manager configured to coordinate internal storage functionalities and handle data retrieval and storage on behalf of the central manager; a contracts database for storing contract templates; a metadata database for archiving metadata relevant to the access control mechanism; and a metadata modeler for generating metadata based on the observed state of a repository.

In some embodiments, the policy engine may comprise: a participant node configured for stakeholder interaction with the blockchain and for contract signatures and updates; and a domain node configured for bridging participant nodes, representing one or multiple parties in an agreement, and for facilitating the realization of the agreement.

In some embodiments, the one or more interfaces may further comprise: a controller configured to implement policy modifications dictated by the policy; and an observer configured to record repository modifications.

In some embodiments, the WFAC client may further be configured to: upload new templates and metadata; populate given templates with specific metadata; affix signatures to templates; and/or administer a localized system.

Other embodiments include a computer-readable storage medium storing instructions which when executed by one or more processors, cause the one or more processors to perform the method according to any one of the methods described above.

Other embodiments include a computer program product comprising instructions which when executed by at least one processor, cause the at least one processor to perform the method according to any one of the methods described above.

### BRIEF DESCRIPTION OF THE DRAWINGS

Aspects, features, and benefits of various embodiments of the present disclosure will become apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
Figure 1 is a simplified schematic diagram illustrating an example system, according to one or more embodiments of the present disclosure.
Figure 2 is a detailed schematic diagram illustrating an example system, according to one or more embodiments of the present disclosure.
Figure 3 is a schematic diagram illustrating an example method, according to one or more embodiments of the present disclosure.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

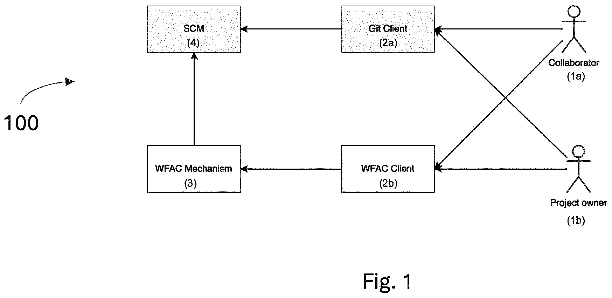

Figure 1 is a schematic diagram illustrating an example system (100) for workflow-aware access control, WFAC, in a source code management, SCM repository (4) according to one or more embodiments of the present disclosure. The architecture according to the present disclosure revolves around Workflow-Aware Access Control (WFAC) collaboration policies, encapsulated within smart contracts on a semi-private blockchain. The system (100) autonomously upholds agreements and dynamically updates policies in alignment with the evolving workflow.

By utilizing the system (100) described herein, project owners can seamlessly grant external collaborators access to their repositories, with access guidelines governed by a specific workflow stage. Inherently responsive, the system (100) is designed to adapt to the fluidity of workflows and any associated events. The WFAC approach described herein enhances the SCM (4) innate access control (AC) capabilities, integrating an additional layer that is both workflow and context-sensitive. Such a WFAC mechanism (3) equips resource owners (1b) with the confidence to securely onboard collaborators (1a) into shared workflows, ensuring the protection and alignment of every stakeholder's (1a, 1b) interests. For example, there are two primary user types in this system:
- Resource Owners (1b): These are the original proprietors of the code base in SCM repository (4).
- Resource Contributors (1a): These are third parties who require access to the codebase. It is noteworthy that a user can simultaneously belong to both categories.

Operating alongside the SCM (4), the system communicates through SCM native interfaces. Thus, the mechanism (3) boasts SCM agnosticism, demanding only the development of a compatible API interface.

The AC mechanism is built upon two foundational elements: metadata and policy templates. For example, policy templates outline broad and generalized frameworks for agreements. Within these templates, metadata facilitates the definition of contract details, such as conditions, obligations, as well as involved resources and parties. Specifically, each party (1a, 1b) can peruse a list of policy templates available in the system (100) and customize them using the provided metadata to craft a workflow-aware access contract. Once created, this contract is deployed on a blockchain (e.g., a semi-private blockchain), awaiting agreement from all involved parties. After obtaining signatures from every participant, the smart contract is finalized, activated, and its directives are carried out. The system (100) may be running in a cloud-based environment, separate from the SCM (4), and may introduce an AC mechanism to integrate with the SCM (4). This design allows for seamless deployment even if the SCM platform (4) exists, ensuring no disruption to its features or significant infrastructure changes for the company. This system (100) employs a hybrid on-chain/off-chain approach, leveraging blockchain technology to execute the smart contracts. The off-chain components manage the system (100), bridging the gap between the SCM (4) infrastructure and the client (1a, 1b, 2a, 2b).

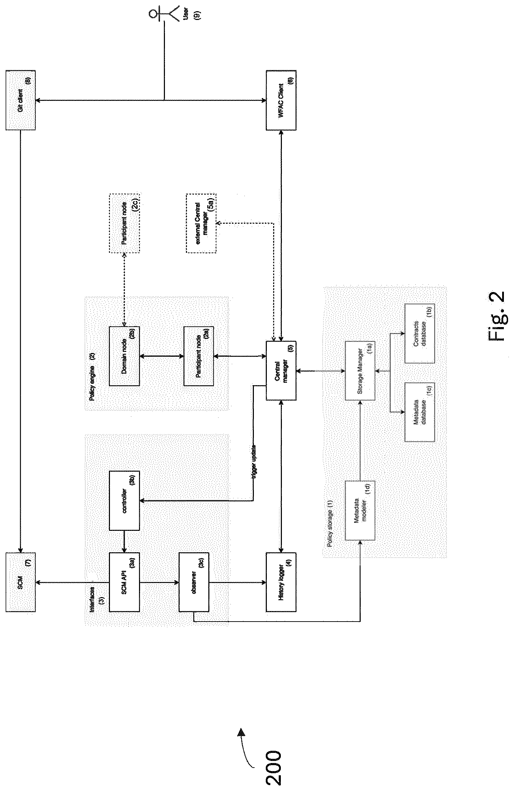

Figure 2 is a detailed schematic diagram illustrating an example system (200) for workflow-aware access control, WFAC, in a source code management, SCM repository (7) according to one or more embodiments of the present disclosure. For example, the architecture (200) may comprise of one or more main components such as a policy storage (1), policy engine (2), one or more interfaces (3), a history logger (4), a central manager (5), and a WFAC client (6). The policy storage (1) maintains off-chain records, including contract templates and metadata, ensuring metadata remains current. For example, the policy storage (1) may comprise a storage manager (1a) configured for coordinating internal storage functionalities and for handling retrieval and storage of data on behalf of the central manager (5). The policy storage (1) may further comprise a contracts database (1b) for storing contract templates, a metadata database (1c) for archiving metadata relevant to the WFAC mechanism, and a metadata modeller (1d) for generating metadata based on an observed state of the SCM repository (7).

Further, the policy engine (2) manages the blockchain-associated components and offers agreement-related utilities. For example, the policy engine (2) may further comprise one or more participant nodes (2a, 2c) configured for granting each stakeholder the ability to interact with the blockchain, allowing for contract signatures and updates, and a domain node (2b) configured for bridging participant nodes (2a, 2c), representing single or multiple parties in an agreement, and facilitating its realization.

The one or more interfaces (3) may provide the means for the system (200) to both oversee and dictate actions upon the SCM platform (4). For example, the one or more interfaces (3) may include an SCM API (3a) as an SCM-specific adapter configured for empowering a controller (3b) and an observer (3c) to smoothly interface with the SCM native platforms. The controller (3b) may implement the modifications dictated by the policy and observer (3c) may record any modifications made to the repository.

The history logger (4) may log every operation carried out on the SCM (7), ensuring both accountability and redundancy.

The central manager (5) is configured to streamline the internal workflow, appraise policy conditions autonomously, process actions sent by the WFAC client (6), harmonize the system's state with external stakeholders, and direct the operations of the controller (3b).

The WFAC client (6) is a user-centric interface for the system (200) configured to upload new templates and metadata, populating given templates, affix signatures to templates, and administer the localized system.

For each participant, the system (200) necessitates the central manager (5), the policy engine (2), and the history logger (4). However, only resource owners may require the inclusion of interfaces (3) and policy storage (1). The policy engine (2) may be configured in various ways, based on the type of interaction - whether centralized, decentralized, or consortium-based. In a centralized configuration a singular central authority manages both a participant node and a domain node. Subsequent parties can then link their nodes to this central domain node. In a decentralized configuration parties have the autonomy to designate an impartial external domain node for complete decentralization. Furthermore, in a consortium-based configuration, member parties can either nominate a domain node provider or connect individually to their specific local domain nodes.

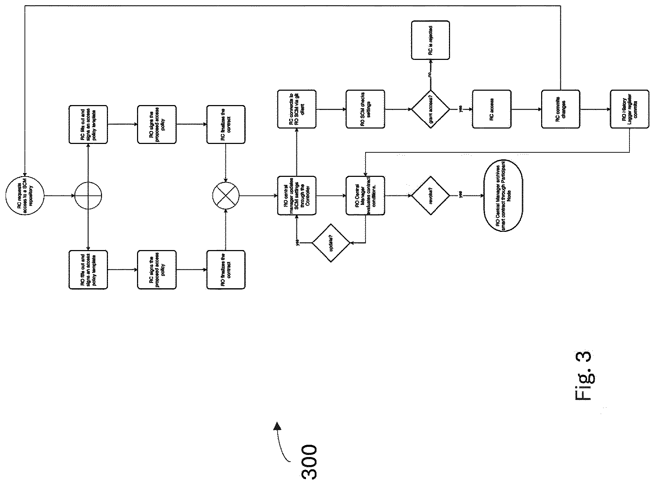

Figure 3 is a schematic diagram illustrating an example method (300) for workflow-aware access control, WFAC, in a source code management, SCM repository according to one or more embodiments of the present disclosure, and more specifically Figure 3 illustrates a flow chart of interactions between a centralized Resource Owner (RO) and a Resource Contributor (RC). After RC requests access to RO SCM repository, a first phase involves creating and agreeing on an access policy. This step can be initiated by any party. Subsequently, the system evaluated the condition and updates the SCM settings, and the resource contributor accesses the repository. Periodically, or upon commits, the mechanism reevaluates the conditions. If termination conditions are met, or a violation happens, the system is brought to a final state. During their workflow, both parties can propose new policies to dynamically update the WFAC mechanism.

In one example configuration, the system (100, 200) may include at least one processing unit (or processor) and memory. The processor may comprise one or more microprocessors, microcontrollers, hardware circuits, discrete logic circuits, hardware registers, digital signal processors (DSPs), field-programmable gate arrays (FPGAs), application-specific integrated circuits (ASICs), programmable logic controllers (PLCs) or a combination thereof. The processor may be programmable hardware capable of executing software instructions stored to implement the WFAC mechanism described herein, e.g., as a machine-readable computer program in the memory. The memory may comprise any non-transitory machine-readable media known in the art or that may be developed, whether volatile or non-volatile, including but not limited to solid state media (e.g., SRAM, DRAM, DDRAM, ROM, PROM, EPROM, flash memory, solid state drive, etc.). Further, the system (100, 200) may also include storage devices including, but not limited to removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in any combination. Similarly, the system (100, 200) may also have input device(s) such as keyboard, mouse, pen, voice input, etc. and/or output device(s) such as a display, speakers, printer, etc. Also included in the system (100, 200) may be one or more communication connections, such as LAN, WAN, point to point, etc. In embodiments, the connections may be operable to facilitate point-to-point communications, connection-oriented communications, connectionless communications, etc. The system (100, 200) may further include interface circuitry configured to control input and output (I/O) data paths of the system (100).

The embodiments of the present disclosure provide an approach for efficient enforcing of dynamic, flexible, and granular access control within a SCM platform. Having described the invention in terms of a preferred embodiment, it will be recognized by those skilled in the art that modifications and variations of the preferred embodiment are possible.

## Claims

1. A computer-implemented method for workflow-aware access control, WFAC, in a source code management, SCM, repository, the method comprising:
receiving, by a central manager, a request from a Resource Contributor, RC, to access the SCM repository owned by a Resource Owner, RO;
initiating, by either the RO or the RC, a creation of an access policy for accessing the SCM repository;
customizing, by the initiating party, a policy template using metadata to define specific contract details;
deploying the customized access policy as a smart contract on a semi-private blockchain;
obtaining agreement from the RO and the RC by collecting digital signatures on the smart contract;
evaluating, by the central manager, one or more conditions specified in the agreed access policy;
updating, by a controller, one or more SCM settings based on the evaluated conditions to grant the RC access to the SCM repository; and
allowing, by the central manager, the RC to access the SCM repository in accordance with the updated SCM settings.

2. The method of claim 1, further comprising:
periodically or upon commits to the SCM repository, reevaluating, by the central manager, the one or more conditions specified in the access policy;
determining if one or more termination conditions are met or if any policy violations have occurred; and
if one or more termination conditions are met or if a policy violation is detected, bringing the system to a final state, wherein the final state involves revoking the RC's access to the SCM repository.

3. The method of claim 1 or 2, further comprising:
proposing other new access policies by either the RO or the RC during the workflow to dynamically update the access to the SCM repository;
customizing and deploying the other new access policies as smart contracts on the semi-private blockchain; and
reevaluating and updating the SCM settings based on the other new access policies.

4. The method of any of the preceding claims, wherein deploying the customized access policy as a smart contract on a semi-private blockchain comprises:
selecting, by the initiating party, a policy template from a list of available templates;
customizing the selected policy template using metadata to define conditions, obligations, involved parties and resources.

5. The method of claim 2, wherein periodically reevaluating the one or more conditions further comprises:
monitoring other events in the SCM repository; and
reevaluating the one or more conditions specified in the access policy based on the monitored events.

6. The method of claim 2, wherein the step of handling one or more termination conditions or violations further comprises:
logging the one or more termination conditions or violation events in a history logger;
notifying all involved parties of the one or more termination conditions or violation events.

7. The method of any of the preceding claims, wherein the central manager operates in a cloud-based environment separate from the SCM repository and integrates with the SCM repository through an SCM API.

8. A system for workflow-aware access control, WFAC, in a source code management, SCM repository, comprising:
one or more processors; and
a memory, the memory storing computer-readable instructions that, when executed by one or more of the processors, cause the one or more of the processors to implement:
a central manager configured to process actions from a WFAC client;
a policy engine configured to manage blockchain-associated components and offer agreement-related utilities;
a history logger configured to log every operation carried out on the SCM repository;
a policy storage component configured to maintain off-chain records including contract templates and metadata;
one or more interfaces comprising an SCM API;
a WFAC client configured to provide a user interface for administering the system;
wherein the instructions, when executed by the one or more of the processors, further cause the one or more of the processors to:
receive, by the central manager, a request from a Resource Contributor, RC,
to access the SCM repository owned by a Resource Owner, RO;
initiate, by either the RO or the RC, a creation of an access policy for accessing the SCM repository;
customize, by the initiating party, a policy template using metadata to define specific contract details;
deploy the customized access policy as a smart contract on a semi-private blockchain;
obtain agreement from the RO and the RC by collecting digital signatures on the smart contract;
evaluate, by the central manager, one or more conditions specified in the agreed access policy;
update, by the controller, one or more SCM settings based on the evaluated conditions to grant the RC access to the SCM repository; and
allow, by the central manager, the RC to access the SCM repository in accordance with the updated SCM settings.

9. The system of claim 8, wherein the system operates in a cloud-based environment separate from the SCM repository and integrates with the SCM repository through the SCM API.

10. The system of claim 8 or 9, wherein the policy storage component further comprises:
a storage manager configured to coordinate internal storage functionalities and handle data retrieval and storage on behalf of the central manager;
a contracts database for storing contract templates;
a metadata database for archiving metadata relevant to the access control mechanism;
a metadata modeller for generating metadata based on the observed state of a repository.

11. The system of any of the preceding claims, wherein the policy engine comprises:
a participant node configured for stakeholder interaction with the blockchain and for contract signatures and updates;
a domain node configured for bridging participant nodes, representing one or multiple parties in an agreement, and for facilitating the realization of the agreement.

12. The system of any of the preceding claims, wherein the one or more interfaces further comprise:
a controller configured to implement policy modifications dictated by the policy; and
an observer configured to record repository modifications.

13. The system of any of the preceding claims, wherein the WFAC client is further configured to:
upload new templates and metadata;
populate given templates with specific metadata;
affix signatures to templates; and/or
administer a localized system.

14. A non-transitory computer-readable storage medium storing computer-executable instructions that, when executed by one or more processors, cause the one or more processors to perform the method of claims 11.

15. A computer program product comprising instructions which when executed by at least one processor, cause the at least one processor to perform the method according to any one of claims 1 to 11.
